# EUROPEAN PATENT SPECIFICATION

(11) **EP 3 970 952 B1**
(45) Date of publication and mention of the grant of the patent: **02.08.2023**
(21) Application number: 19942700.6
(22) Date of filing: 27.08.2019
(51) Int. Cl.: B29C 64/209, B29C 64/118, B33Y 30/00, B22F 12/53

(54) **DEPOSITION MATERIAL HOT END FOR 3D FABRICATION APPARATUS AND 3D FABRICATION APPARATUS TO WHICH HOT END IS MOUNTED**
HEISSES ENDE FUER DRUCKMATERIAL FÜR EINE 3D-HERSTELLUNGSVORRICHTUNG UND 3D-HERSTELLUNGSVORRICHTUNG, AUF DER DAS HEISSE ENDE MONTIERT IST
EXTRÉMITÉ CHAUDE POUR MATÉRIAU DE DÉPÔT POUR UN APPAREIL DE FABRICATION 3D ET APPAREIL DE FABRICATION 3D SUR LEQUEL L'EXTRÉMITÉ CHAUDE EST MONTÉE

(43) Date of publication of application: 23.03.2022
(73) Proprietor: Taniguchi, Hideo, Kyoto-shi Kyoto 615-8224 (JP)
(72) Inventor: Taniguchi, Hideo, Kyoto-shi Kyoto 615-8224 (JP)
(74) Representative: Bryn Aarflot AS
(86) International application number: PCT/JP2019/033541
(87) International publication number: WO 2021/038721

(56) References cited:
- JP-A- 2013 511 432
- JP-A- 2019 069 592
- KR-A- 20190 075 210
- US-A- 5 340 433

## Description

### TECHNICAL FIELD

The invention relates to a deposition material hot end for a FFF (FDM) 3D fabrication apparatus (3D printer) and a 3D fabrication apparatus to which the hot end is mounted.

### BACKGROUND ART

In recent years, manufacturing a three-dimensional fabricated object with a 3D printer using a computer has become popular. As a hot end to manufacture such a three-dimensional fabricated object, one having a structure as shown in FIG. 8, for example, is known (see Non-patent document 1, for example). The above-mentioned hot end comprises a structure in which a nozzle 101 is screwed into the one end side of a heater block 103 so as to cause a discharging portion 101a to protrude, and a barrel 102 having a supplying portion of a deposition material (fabrication material) is screwed into the other end side of the heater block 103. A wire-shaped deposition material (a filament) is inserted and fed into the above-mentioned barrel 102 to cause the deposition material to be heated and melted by the heater block 103 to cause the heated and melted deposition material to flow to the discharging portion 101a and to be discharged from the discharging portion 101a. Here, the filament is fed into the barrel 102 in an amount as needed by a control signal to cause the filament in an amount necessary to be discharged from the discharging portion 101a, and the position of the above-mentioned discharging portion 101a relatively moves in the xyz directions with a fabrication table (not shown), which fabrication table forms a fabricated object, to keep depositing the deposition material discharged, causing a desired three-dimensional fabricated object to be formed.

Moreover, in such a hot end, providing a heat dissipating fin (not shown) at an upper portion of the barrel 102 and forcibly cooling the barrel 102 by a fan or water cooling are being carried out to prevent the filament from melting in the barrel 102.

### PRIOR ART DOCUMENT

Non patent document 1: "Digital manufacturing starting with 3D printers", authored by Kazuo Kadota, The Nikkan Kogyo Shimbun, Ltd., page 103. US 5 340 433 A discloses a hot end for a 3D apparatus according to the preamble of the appended claim 1.

### SUMMARY OF THE INVENTION

### PROBLEM TO BE SOLVED BY THE INVENTION

However, with the conventional hot end, there is a problem that clogging due to a filament often occurs in a flow path of the barrel 102, causing a trouble in fabrication. The inventor has found the cause of the above-mentioned problem being that even when, by cooling with a heat dissipating fin to prevent melting of the filament on the barrel 102 side at the time of continuous fabrication, the filament could be maintained in a solid state in the flow path of the filament of the barrel 102, as the diameter of a discharging opening to discharge the melted filament is less than the diameter of the filament to be fed, the filament melted on the nozzle 101 side when the filament is pressed to be fed into the flow path invades (reversely flows) to the barrel 102 side from a gap (clearance) between the flow path inner wall and the filament, or in other words the gap between the solid state filament and the flow path inner wall, due to the difference between the inner diameter of the flow path and the wire diameter of the filament. That is, the filament being caused to be melted on the nozzle 101 side invades to the barrel 102 side from the clearance and is fixed in the flow path on the barrel 102 side, clogging of the filament occurs in the flow path in the barrel 102, and feeding of the filament into the flow path is inhibited, making it not possible to discharge a deposition material and causing a trouble in fabrication. Thus, an attempt to prevent a reverse flow of the melted filament by bringing the inner diameter of the flow path to be close to the wire diameter of the filament to make the clearance as small as possible does not allow effectively preventing the reverse flow since the wire diameter of the filament originally is not constant but includes the tolerance.

In view of such circumstances, an object of the invention is to provide a highly reliable hot end that can continuously fabricate well and a 3D fabrication apparatus to which the hot end is mounted, which hot end and 3D fabrication apparatus can prevent clogging of a filament in a flow path by preventing a melted deposition material from flowing reversely in the flow path toward the filament supplying side more than necessary.

### MEANS TO SOLVE THE PROBLEM

As a result of repeated intensive studies, the inventor has found that providing, between a melting portion in which a filament is melted and a supplying opening through which the filament is supplied, a reverse flow preventing member to prevent a reverse flow of a melted deposition material in a hot end for a 3D fabrication apparatus allows the reverse flow of the deposition material to be suppressed and makes an occurrence of clogging of a flow path of the hot end less likely.

The main features of the present invention are given in the independent claims. Additional features of the invention are given in the dependent claims. That is, the invention relates to a hot end for a 3D fabrication apparatus, according to the appended claim 1.

As the hot end according to the invention is configured to arrange the ring-shaped reverse flow preventing member in the flow path, with which ring-shaped reverse flow preventing member the filament-shaped deposition material (filament) is brought into contact to be inserted therethrough, a gap between the filament and the ring inner wall of the reverse flow preventing member can be reduced so as to be substantially negligible as to push (supply) the filament thereinto, allowing the deposition material melted by heat of the heating means to be prevented from flowing reversely in the flow path toward the supplying opening side (upstream side) beyond the reverse flow preventing portion. This makes it possible to effectively prevent the deposition material melted in the flow path on the downstream side from invading (flowing reversely) into the flow path on the upstream side with respect to the reverse flow preventing member, making it possible to realize a highly reliable hot end that can prevent clogging in the flow path to supply the deposition material to continuously fabricate well. The printhead according to the invention can be integrally formed, or can been formed of a body divided into two of a melting portion in which a heating means to melt the filament is provided and a supplying portion to supply the filament to the melting portion or, further, of a body divided into three.

The hot end can comprise a metal member to be mounted so as to surround a region in which the reverse flow preventing member in the flow path is arranged. Moreover, it can comprise a case member being fixed to the metal member to cover the heating means.

The metal member surrounding the region in which the reverse flow preventing member is arranged to make temperature distribution in the flow path suitable makes it possible to prevent melting of a filament on the upstream side of the flow path. That is, the heat capacity and the surface area of the surrounding region of the reverse flow preventing member can be increased by the metal member, making it possible to prevent heat by the heating means from being transferred to the upstream side with respect to the reverse flow preventing member. That is, the metal member functions as a cooling member. Therefore, the border between a solid portion of the filament and a melted and fluidized portion thereof can be further clarified and the filament being softened in the flow path on the upstream side with respect to the reverse flow preventing member can be suppressed, so that clogging of the filament in the flow path can be suppressed more effectively. Moreover, the case member (covering member) being provided makes it possible to suitably dissipate heat by the heating means from the outer surface of the case member, to prevent the above-mentioned heat from being transferred to the upstream side of the flow path, and to trap the heat in the case member and more effectively utilize the heat by the heating means for melting of the filament. As a result, making the temperature distribution in the flow path suitable makes it possible to prevent melting of the filament on the upstream side of the flow path and to further prevent clogging of the filament in the flow path.

The reverse flow preventing member is preferably arranged in abutment with a stepped portion in the flow path. The reverse flow preventing member being arranged in abutment with the stepped portion makes it possible to prevent the reverse flow preventing member from being pushed to the downstream side, so that the reverse flow preventing member can be held at an appropriate position.

Moreover, the printhead can have a cylinder shape, and the thickness of the peripheral wall of the region in which the reverse flow preventing member in the flow path is arranged can be brought to be thinner than the thickness of the peripheral wall of a region in which the heating means is arranged. Bringing the thickness of the peripheral wall of the region in which the reverse flow preventing member of the printhead is arranged to be thin makes it possible to suppress the heat by the heating means to be transferred, along the peripheral wall, to the upstream side with respect to the reverse flow preventing member.

An annular detachment preventing member to prevent the reverse flow preventing member from moving toward the supplying opening side can be arranged in the flow path toward the supplying opening side with respect to the reverse flow preventing member, the inner diameter of which detachment preventing member is greater than that of the reverse flow preventing member. This makes it possible to hold the reverse flow preventing member at a desired position in the flow path.

The reverse flow preventing member can be made of an elastic body, a superelastic alloy, or a super elasto-plastic alloy having heat resistance. In this case even when tolerance in the filament diameter is exists, it is made possible to make the ring inner diameter of the reverse flow preventing member changeable so as to follow a change in the wire diameter of the filament, with the reverse flow preventing member being in close contact with the filament with substantially no gap therewith, to feed the filament therein, and to prevent a reverse flow of the filament.

Moreover, the ring shape is a spiral shape, a coil shape, or a coil spring shape. As what are described above causes friction resistance (skid resistance) to change in accordance with the contact area between the reverse flow preventing member and the filament, forming the reverse flow preventing member in the spiral shape, coil shape, or coil spring shape.

The 3D fabrication apparatus according to the invention is characterized in that the above-described hot end for a 3D fabrication apparatus is mounted thereto.

### EFFECTS OF THE INVENTION

As the invention makes it possible to prevent a deposition material (filament) melted on the downstream side in a flow path from reversely flowing toward the upstream side in the flow path with respect to a reverse flow preventing member arranged in the flow path, making it possible to provide a highly reliable hot end and a 3D fabrication apparatus to which this is mounted, which hot end and 3D fabrication apparatus allows using a hot end while preventing an occurrence of clogging of the flow path, which clogging causes a trouble in a fabrication operation, and realizing a fabrication operation to continuously fabricate well.

### BRIEF DESCRIPTION OF THE DRAWINGS

FIG. 1 is a cross-sectional view of one example of a hot end according to one embodiment of the invention.
FIG. 2 is a front view (A) and a bottom view (B) of a printhead used in the hot end according to one embodiment of the invention.
FIG. 3 is a front view (A) and a bottom view (B) of a metal member used in the hot end according to one embodiment of the invention.
FIG. 4 is a front view (A) and a bottom view (B) of a case member used in the hot end according to one embodiment of the invention.
FIG. 5 is a view to explain a heating means in the hot end according to one embodiment of the invention.
FIG. 6 is a block diagram to explain one example of control of a heating amount by the heating means.
FIG. 7 is a cross-sectional view of another example of the hot end according to one embodiment of the invention.

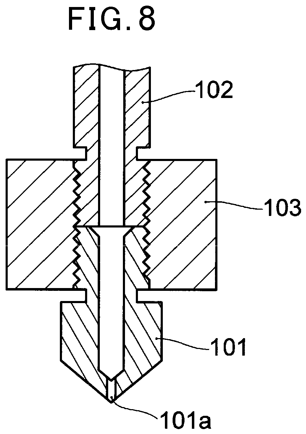

FIG. 8 is a cross-sectional view of one example of a conventional hot end.

### EMBODIMENT FOR CARRYING OUT THE INVENTION

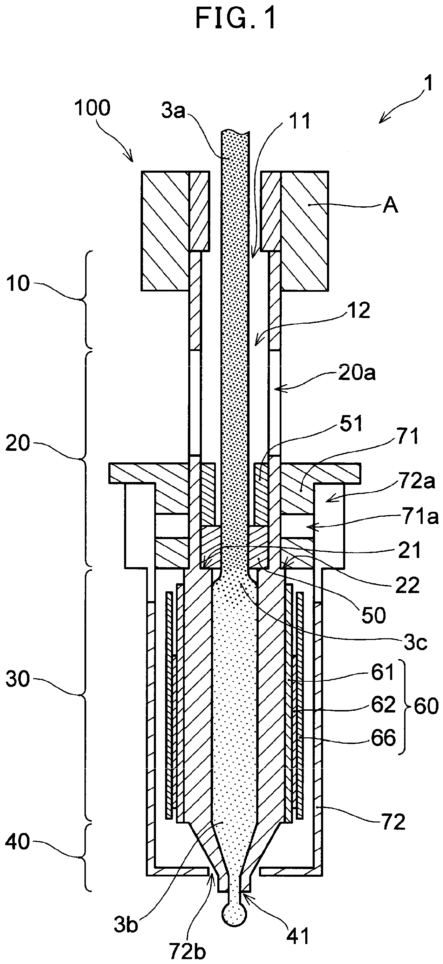

Below, a deposition material hot end for a 3D fabrication apparatus according to one embodiment of the invention is described with reference to the drawings. FIG. 1 is a cross-sectional explanatory view of a hot end 1 according to the invention. The hot end 1 is formed using a printhead 100 having a supplying portion 10 comprising a supplying opening 11 into which is supplied a filament-shaped deposition material (a filament 3a), a melting portion 30 to melt the deposition material supplied, a discharging portion 40 comprising a discharging opening 41 to discharge the deposition material melted, a heat insulating portion 20 to be formed between the supplying portion 10 and the melting portion 30, and a flow path 12 to communicatively couple the supplying opening 11 to the discharging opening 41, which flow path 12 is for the deposition material. An attaching jig A to mount the hot end 1 to the 3D fabrication apparatus is mounted to the supplying portion 10.

The hot end 1 comprises a heating means (heating head) 60 mounted to the melting portion 30, and the deposition material in the flow path 12 is melted by heat given to the melting portion 30 of the printhead 100 from the above-mentioned heating means 60. In the example shown in FIG. 1, two of the heating means 60 are provided so as to sandwich the printhead 100 therebetween. In the flow path 12 between the heating means 60 and the supplying opening 11 is arranged a ring-shaped reverse flow preventing member 50 to prevent the deposition material melted by the heating means 60 from reversely flowing toward the supplying opening 11 side.

In the shown example in FIG. 1, the reverse flow preventing member 50 is provided in contact with the upper surface of a stepped portion 21 provided at the inlet (the border portion between the heat insulating portion 20 and the melting portion 30) into which the deposition material of the melting portion 30 in the flow path 12 of the printhead 100 is supplied. It is fixed so as to be sandwiched by an annular fixing member (detachment preventing member) 51 having an inner diameter being greater than that of the reverse flow preventing member 50. The diameter of the flow path 12 is formed, at the inlet of the melting portion 30, so as to be less toward the melting portion 30 side than toward the heat insulating portion 20 side. The reverse flow preventing member 50 is arranged in abutment with the portion of a step at which the diameter of the flow path 12 changes (the stepped portion 21) and is prevented from entering the flow path 12 of the melting portion 30.

The filament 3a in solid state is inserted from the supplying opening 11 to the flow path 12, is inserted through the ring-shaped reverse flow preventing member 50 installed in the flow path 12 to be fed into the melting portion 30, is melted by heat given by the heating means 60, and is discharged from the discharging opening 41 provided in the discharging portion 40. The filament in solid state is denoted as 3a, the filament in melted state is denoted as 3b, and the filament in solid-liquid mixed state is denoted as 3c.

In the example shown in FIG. 1, the tip (lower end) on the melting portion 30 side of the detachment preventing member 51 is in abutment with the reverse flow preventing member 50. While the reverse flow preventing member 50 is fixed so as to be sandwiched between the detachment preventing member 51 and the stepped portion 21 of the flow path 12, the reverse flow preventing member 50 can be pressed in the flow path 12 to be fixed thereto with the detachment preventing member 51 not being provided, or, a body divided into two, in which body the supplying portion 10 and the heat insulating portion 20 on the upstream side of the printhead 100 are formed like a barrel and the melting portion 30 and the discharging portion 40 on the downstream side thereof are formed like a nozzle, can be arranged in the flow path 12 so as to sandwich the reverse flow preventing member 50 therebetween.

In the example shown in FIG. 1, the reverse flow preventing member 50 is formed in a ring shape that can hold a part of the peripheral edge in the length direction of the filament by surrounding it in contact therewith. In particular, the reverse flow preventing member 50 is preferably formed with a material having the elasticity with which a state in which the inner diameter thereof follows the fluctuation within the tolerance of the wire diameter of the filament and the reverse flow preventing member 50 holds the filament in close contact therewith can be maintained, in which case, when, for example, a filament having the diameter of 1.75 mm, in which filament the tolerance of the wire diameter thereof is ±0.05 mm. is used, the inner diameter of the reverse flow preventing member 50 is formed to be 1.70 mm and is formed such that it can follow the fluctuation of the diameter in the range of 1.70 mm to 1.80 mm.

The hot end 1 shown in FIG. 1 comprises a metal member (metal block) 71 to be mounted on the outer periphery of the printhead 100 and a case member (covering member) 72. The metal member 71 is a substantially circular cylinder-shaped member having, at the upper portion thereof, a portion extending in a flange shape, and a through-hole being fitted to the outer shape of the printhead 100 is provided at the center thereof. The printhead 100 is inserted through the above-mentioned through-hole, and the metal member 71 is mounted in contact with the outer periphery of a region of the printhead 100 in which region the reverse flow preventing member 50 is arranged. On the lateral surface of the metal member 71 is formed a mounting hole 71a. The metal member 71 is fixed to the printhead 100 by a fixing means to be inserted through the above-mentioned mounting hole 71a, which fixing means includes a set screw, for example. Moreover, for fixing the metal member 71, at a part of the outer periphery of the border with the heat insulating portion 20 above the melting portion 30 of the printhead 100 (a position opposing the stepped portion 21 in the flow path 12), a stepped portion 22 whose lower side slightly protrudes, the metal member 71 is fitted thereinto from the supplying opening 11 side at the upper end of the printhead 100, and is positioned such that the lower end portion thereof is in abutment with the upper surface of the stepped portion 22. The mounting position of the metal member 71 with respect to the printhead 100 is configured to be movable along the length direction of the printhead 100.

The metal member 71 being mounted near the region in which the reverse flow preventing member 50 of the printhead 100 is provided causes the heat capacity near the border between the melting portion 30 and the heating insulating portion 20 of the printhead 100 to increase, making a rise in temperature in the above-mentioned region to be less likely. Moreover, the surface area of the metal member 71, in particular a flange-shaped portion thereof, increasing allows the heat dissipating effect to be obtained. Therefore, heat on the downstream side added to the melting portion 30 of the printhead 100 from the heating means 60 to melt the filament being transferred to the heat insulating portion 20 on the upstream side can be suppressed, making it possible to bring the temperature between the heating insulating portion 20 and the supplying portion 10 to a suitable temperature. That is, the possibility of the border between the solid portion and the molten portion of the filament shifting to a region of the reverse flow preventing member 50 being arranged, causing the filament of the portion held by the reverse flow preventing member 50 to melt, and the function of preventing the reverse flow of the filament by the reverse flow preventing member 50 being impaired is suppressed. In other words, the solid state of the filament to be inserted through the reverse flow preventing member 50 can be maintained more surely.

The case member 72 has a substantially circular cylinder shape, the upper portion thereof is mounted so as to be fitted to the outer periphery of the metal member 71 and fixed thereto. A notch (groove portion) 72a is formed at the upper portion of the case member 72, the position of the mounting hole 71a formed on the lateral surface of the metal member 71 described above and the position of the above-mentioned groove portion 72a are matched and a fixing means such as a set screw is inserted through the groove portion 72a and the mounting hole 71a to allow the case member 72 and the metal member 71 to be integrally fixed to the printhead 100.

The case member 72 covers the entire surrounding of the melting portion 30 to which the heating means 60 of the printhead 100 is mounted. A hole 72b from which the discharging opening 41 is projected is provided on the side (the discharging portion 40 side) opposite to the side being fitted to the metal member 71. The case member 72 has a function of circulating, to the melting portion 30 side, and reutilizing heat transmitted to the metal member 71 from the printhead 100. The covering member 72 being provided in addition to the metal member 71 makes it possible to set, in accordance with the type of the filament, the temperature distribution (the temperature gradient) in a region of a predetermined width from near the inlet of the melting portion 30 to the discharging portion 40 to be a stable temperature distribution with a less likely occurrence of clogging of the flow path 12. Moreover, the effect of heat dissipation by the surface of the case member 72 can also be expected, heat on the downstream side to be added to the melting portion 30 of the printhead 100 from the heating means 60 to melt the filament being transferred to the heat insulating portion 20 on the upstream side can further be suppressed, making it possible to bring the temperature between the heating insulating portion 20 and the supplying portion 10 to a more suitable temperature. A heat-resistant insulating material such as glass fiber can be filled into a space between the case member 72 and the printhead 100 covered by the case member 72. The groove portion 72a being formed at the upper portion of the case member 72 has a predetermined length in the longitudinal direction, making it possible to move the mounting position of the case member 72 with respect to the metal member 71 in the longitudinal direction. That is, the range covered by the case member 72 can be arbitrarily adjusted in accordance with the mounting position of the metal member 71 and the case member 72 with respect to the printhead 100.

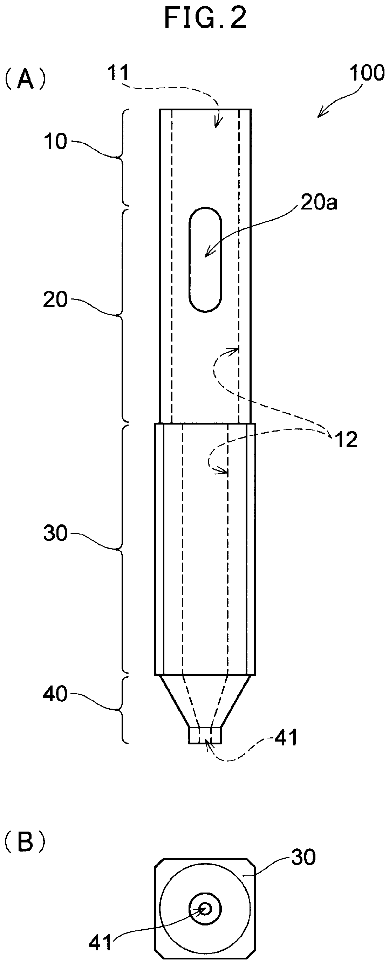

A front view, as viewed from the side of the surface of the printhead 100 used in the hot end 1 shown in FIG. 1, on which side the heating means 60 to be mounted, is shown in (A) of FIG. 2, while a bottom view, as viewed from the side of the discharging opening 41 thereof, is shown in (B) of FIG. 2. In the printhead 100, the supplying portion 10, the heat insulating portion 20, the melting portion 30, and the discharging portion 40 can be integrally formed using any one of stainless steel, a nickel alloy, titanium, a titanium alloy, and ceramics, for example. The printhead 100 can be formed with a combination of independent members, or a different member can be interposed in any one or all of spaces between each of the members. In a case that the printhead 100 is formed with the combination of the independent members, the heat conductivity of a material for a member used in the melting portion 30 and the discharging portion 40 being greater than the heat conductivity of a material of a member used in the heat insulating portion 20 is preferable from a viewpoint of effectively utilizing heat of the heating means 60 for melting of a deposition material while suppressing heat transfer to the supplying portion 10 side.

The printhead 100 shown in FIG. 2 is a circular cylinder-shaped metal rod being subjected to cutting and machining, for example. The entire length of a portion of the printhead 100, which portion is shown in (A) of FIG. 2, is 33 mm, for example. The printhead 100 is formed using, for example, 64 titanium (an alloy in which 6 mass% of aluminum and 4 mass% of vanadium are mixed with titanium).

In the example shown, the supplying portion 10 and the heat insulating portion 20 are configured to be in a shape of a circular cylinder with the diameter of 3 mm, for example, and to have 17.5 mm in length, for example. At the center portion of the supplying portion 10 and the heat insulating portion 20 is formed the flow path 12 with the diameter of 2.3 mm, for example. The heat insulating portion 20 is formed such that the heat resistance thereof is greater than that of the melting portion 30. On the peripheral wall of the heat insulating portion 20 is formed, in a pair, an opening 20a opposing the flow path 12, which opening 20a has the length of 6 mm and the width of 1.8 mm, for example, and can decrease the cross-sectional area of the heat insulating portion 20 to increase the heat resistance thereof. The opening 20a can be provided in one or a plurality in the length direction and/or the width direction of the printhead 100 and the size thereof can be determined appropriately.

In the example shown, the melting portion 30 is formed in a shape of a quadrangular cylinder having a cross-sectional shape of a rectangle with 3.2 mm on one side, for example, the corner of which quadrangular cylinder is formed as a C surface and the length of which quadrangular cylinder is 12.5 mm, for example. The heating means 60 can be mounted to each of four lateral surfaces (flat surface portions) of the quadrangular cylinder-shaped melting portion 30. The melting portion 30 can be formed in a shape of a polygonal cylinder other than the quadrangular cylinder (for example, a triangular cylinder shape, or a pentagonal cylinder shape) depending on the size, number, position of the heating means 60 to be mounted to the melting portion 30. At the center of the melting portion 30 is formed the flow path 12 with the diameter of 1.8 mm, for example, such that it is communicatively coupled with the flow path 12 of the heat insulating portion 20. As described above, the diameter of the flow path 12 in the melting portion 30 is formed to be less than the diameter of the flow path 12 in the heat insulating portion 20, and the stepped portion 21 that can fix the reverse flow preventing member 50 is formed at the border of the melting portion 30 and the heating insulating portion 20, the flow path diameter of which melting portion 30 and heating insulating portion 20 changes. That is, the thickness of the peripheral wall of the flow path 12 in the heat insulating portion 20 is formed to be less than the thickness of the peripheral wall of the flow path 12 in the melting portion 30. On the four lateral surfaces of the melting portion 30, an opening to expose the flow path 12 can be formed to more efficiently heat and melt the deposition material in the interior thereof. The heating means 60 being mounted to close the opening allows the deposition material to be heated directly by the heating means 60, so that melting of the deposition material can be carried out more efficiently.

The discharging portion 40 is configured to have a shape of a substantially circular cone with the length of 3 mm, for example, and has a shape being tapered toward the tip of the discharging portion 40 (the discharging opening 41) from the melting portion 30. The discharging portion 40 is formed to have 3 mm in diameter, for example, at the border with the melting portion 30, and, at the tip at which the discharging opening 41 is formed, it is formed to have 1.5 mm in diameter, for example, and the discharging opening 41 is formed to have 0.4 mm in diameter, for example.

The attaching jig A is connected to the supplying portion 10 such that it is fitted thereto. The attaching jig A has a shape of a circular cylinder with the length of 5 mm and the diameter of 4 mm, for example. The attaching jig A has a role as a mounting portion to mount the hot end 1 to the body of a 3D fabrication apparatus. The size of each portion of the printhead 100 and the flow path 12 described above can be changed appropriately in accordance with the size of the filament.

As described above, the reverse flow preventing member 50 in the hot end 1 according to the invention is provided to prevent the deposition material melted from reversely flowing to the supplying portion 10 side. The filament is inserted through the ring-shaped reverse flow preventing member 50, and the reverse flow preventing member 50 is brought into close contact with the outer periphery at a part of the filament with substantially no gap therewith. The filament is held by the reverse flow preventing member 50 with a force of the degree such as to not inhibit feeding of the filament in conjunction with the fabrication operation. The filament to be used for 3D fabrication can fluctuate in diameter in the length direction thereof. A filament with the diameter of 1.75 mm can have a tolerance of ±0.05 mm, for example, so that the reverse flow preventing member 50 is preferably formed with a material having the elasticity with which the reverse flow preventing member 50 can be in close contact with the filament following the fluctuation of the diameter thereof.

A material to be used for the reverse flow preventing member 50 preferably has heat resistance to the temperature at which the filament melts, and, as one example, an Ni-Ti-based alloy being a superelastic alloy can be used. The Ni-Ti-based alloy being the superelastic alloy has a recovery strain of approximately 8%, which recovery strain is because of the superelasticity thereof, and can sufficiently follow the fluctuation of the diameter of the filament. Moreover, a heat resistant elastic resin can be used, so that, for example, perfluoro elastomer (FFKM) that can maintain the physical properties of rubber even at a high temperature around 300°C, for example, can be used. Furthermore, a super elasto-plastic alloy having both the superelastic property and the superplastic property can also be used. The super elasto-plastic alloy is preferable in that molding is quite easy because of the superplastic property in which at least 99.9% can be cold formed at room temperature and in that the processability thereof is also superior. One example of the super elasto-plastic alloy is "rubber metal" (registered trademark) manufactured by TOYOTA TSUSHO MATERIAL INCORPORATED, which "rubber metal" belongs to β-type titanium alloys.

The shape of the reverse flow preventing member 50 is formed in a shape of a ring with which the inside of the reverse flow preventing member 50 can hold the filament in solid state in close contact therewith. Here, the shape of the ring being capable of holding the outer periphery of the filament by surrounding it, is a spiral shape, a coil shape or a coil spring shape. For the reverse flow preventing member 50 of the spiral shape, the coil shape, or the coil spring shape, the number of turns of the coil is preferably set to be 2 to 3 rounds, for example. In following the change in the wire diameter of the filament, not only the change in the coil inner diameter, but, in a case of the coil spring shape, deforming of a spring also contribute thereto, which is preferable as it can be followed better.

While the one reverse flow preventing member 50 is provided in the flow path 12 in the example shown in FIG. 1, the reverse flow preventing member 50 can be provided in a plurality. That is, a plurality of ring-shaped members can be stacked to be arranged in the flow path 12. For example, the reverse flow preventing member 50 being ring shaped can be arranged near the inlet of the melting portion 30 in the flow path 12 such that they are stacked with one another in close contact therewith. This allows holding of the filament by the reverse flow preventing member 50 to be carried out more surely. The plurality of ring-shaped reverse flow preventing members 50 can be arranged in mutual separation.

As shown in FIG. 1, the detachment preventing member 51 being annular is provided on the supplying opening 11 side of the reverse flow preventing member 50, which reverse flow preventing member 50 is fixed so as to be sandwiched between the detachment preventing member 51 and the stepped portion of the flow path 12. For the detachment preventing member 51, from a viewpoint of stably fixing the reverse flow preventing member 50 in the flow path 12, a metal such as stainless steel, a nickel alloy, titanium, or a titanium alloy, for example, is preferably used, and an Ni-Ti-based alloy being a shape memory alloy is more preferably used. Engineering plastic such as polytetrafluoroethylene (PTFE) or polyetheretherketone (PEEK) can be used. Moreover, the reverse flow preventing member 50 can be fixed by joining thereof into the flow path 12 using a heat resistant adhesive such as a metal paste or an inorganic adhesive, for example.

From a viewpoint that the reverse flow preventing member 50 prevents the reverse flow of the filament melted, the filament of the portion to be held thereby needs to be a solid. That is, a portion in which the reverse flow preventing member 50 is provided (the neighborhood of the border between the melting portion 30 and the heating insulating portion 20) needs to be temperature controlled to a temperature at which the filament does not melt. To suppress a temperature rise in a region in which the reverse flow preventing member 50 is provided, which temperature rise is caused by heat given from the heating means 60 to be transferred to the filament upstream side of the melting portion 30, the metal member 71 formed of aluminum or stainless steel, for example, can be provided on the outer periphery near the border between the melting portion 30 and the heating insulating portion 20.

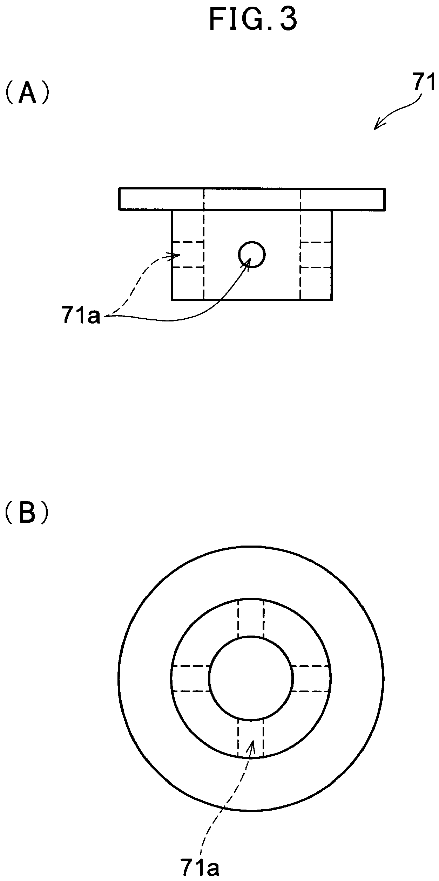

A front view of one example of the metal member 71 is shown in (A) of FIG. 3, and a bottom view thereof is shown in (B) of FIG. 3. The metal member 71 can be formed using a known metal such aluminum or stainless steel, for example. From a viewpoint of increasing the heat capacity of an area of the printhead 100, to which area the metal member 71 is mounted, a material having a large specific heat is preferably used for the metal member 71. Moreover, from a viewpoint of heat dissipation, a process to improve the heat dissipation ability is preferably administered on the metal member 71. For example, aluminum, on the surface of which aluminum an almite process is administered, is preferably used. The metal member 71 is a member having a shape of a circular cylinder having, at the center thereof, an inner cavity of substantially the same diameter and has, on one end side thereof, a flange-shaped portion with a large outer diameter formed. In the example shown, the outer diameter of the flange-shaped portion is formed to a diameter of 14 mm, for example. The outer diameter of a circular cylinder-shaped portion other than the flange-shaped portion is formed to a diameter of 7.9 mm, for example. The inner cavity of the metal member 71 is formed to be fitted to the shape and size of the heat insulating portion 20 of the printhead 100 and is formed to have the diameter of 3.1 mm, for example.

The metal member 71 being mounted allows the heat capacity of the region in the neighborhood of the border between the melting portion 30 and the heat insulating portion 20 to increase. The heat capacity of the region described above increasing makes it less likely for the temperature to rise even when much heat concentrates to a deposition material remaining in the flow path 12 in the neighborhood of the border portion between the melting portion 30 and the heating insulating portion 20 when discharging of the deposition material is stopped. Therefore, the border between the solid portion of the deposition material and the melted and fluidized portion thereof shifting toward the heat insulating portion 20 side can be suppressed. That is, melting of the filament of the portion held by the reverse flow preventing member 50 is suppressed, so that clogging of the deposition material in the flow path 12 can be suppressed. Moreover, the metal member 71 also has an effect of dissipating heat at the border between or in the neighborhood of the border portion between the melting portion 30 and the heat insulating portion 20 and also can further enhance the effect of preventing clogging by enhancing the heat dissipation effect because of the shape thereof.

Four of through-holes (the mounting holes) 71a through which a fixing means to the printhead 100 can be inserted are formed on the lateral surface of the metal member 71. The metal member 71 can be mounted to an arbitrary position in the length direction of the heat insulating portion 20 of the printhead 100. That is, it can be mounted with the position thereof being adjusted such that the temperature in a region near the border between the melting portion 30 and the heat insulating portion 20 is suitably maintained in accordance with the melting temperature of the filament used or the feed rate of the filament. While an example is shown in FIG. 1, in which example the inner cavity of the metal member 71 is fitted to the shape of the outer periphery of the heat insulating portion 20 of the printhead 100 and mounted to the heat insulating portion 20, the inner cavity of the metal member 71 can also be fitted to the shape of the outer periphery of the melting portion 30 and mounted on the outer periphery of the melting portion 30.

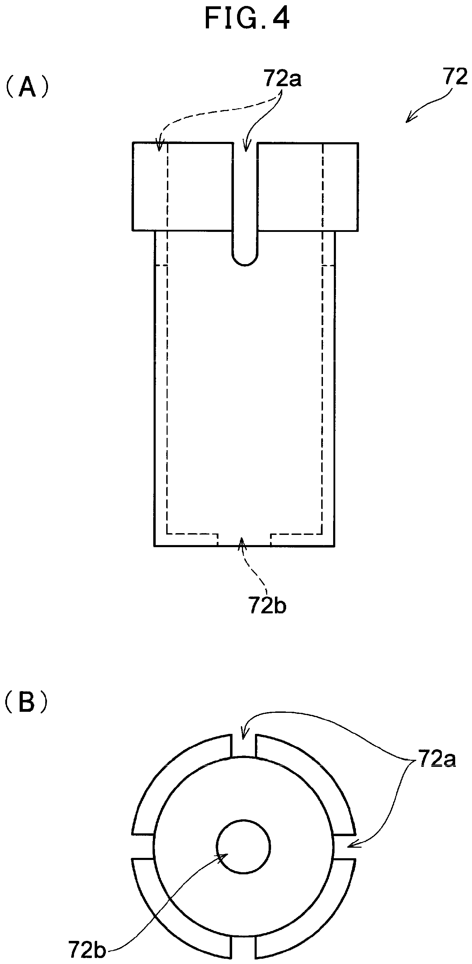

A front view of one example of the case member 72 is shown in (A) of FIG. 4, and a bottom view thereof is shown in (B) of FIG. 4. In the same manner as the metal member 71, the case member 72 is formed using a known metal such as aluminum or stainless steel, for example. In a case that aluminum is used, an alumite process is preferably administered on the surface thereof. The case member 72 is a member having a substantially circular cylinder shape, one end side of which case member 72 is fitted to the metal member 71. On the side opposite to a portion fitted to the metal member 71, it has a bottom face on which is formed the hole 72b to discharge the discharging opening 41 of the printhead 100, at the center thereof. In the example shown, the diameter of the inner cavity of the case member 72, to which inner cavity the metal member 71 is fitted, is formed to a diameter of 8 mm, for example. The length of the case member 72 is 18.0 mm, for example.

The case member 72 is provided to effectively utilize heat transmitted to the metal member 71 from the printhead 100 for heating on the melting portion 30 side. The case member 72 covering a predetermined region from the melting portion 30 to the discharging portion 40 makes it possible to form a stable temperature distribution (temperature gradient) in the above-mentioned region. That is, the case member 72 makes it possible to provide an energy saving effect of effectively utilizing heat given to the printhead 100 from the heating means 60, and stabilize the temperature distribution in a predetermined region from the melting portion 30 to the discharging portion 40 and contribute to a stable fabrication operation.

The groove portion 72a is formed on the side of the case member 72, which side is to be connected to the metal member 71. In a case that the metal member 71 and the case member 72 are mounted to the printhead 100, they are arranged such that the position of the mounting hole 71a of the metal member 71 and the position of the groove portion 72a of the case member 72 match each other, and the metal member 71 and the case member 72 are fixed to the printhead 100 with a fixing means such as a set screw, which fixing means is inserted through the groove portion 72a and the mounting hole 71a. When the metal member 71 and the case member 72 are mounted to the above-mentioned printhead 100, the mounting position of the metal member 71 with respect to the printhead 100 can be moved in the length direction of the printhead 100, and the mounting position of the case member 72 with respect to the metal member 71 can be moved in the length direction of the case member 72. That is, the region covered by the case member 72 is configured to have a structure that can be changed in accordance with the mounting position of the metal member 71 with respect to the printhead 100 and the mounting position of the case member 72 with respect to the metal member 71.

The temperature distribution (temperature gradient) of a region having a predetermined width from the discharging portion 40 to the heat insulating portion 20 can be adjusted by changing the region covered by the case member 72. It can be made closer to a suitable temperature gradient according to the type or properties (physical properties) of the deposition material, making it possible to suppress an occurrence of clogging of the deposition material in the flow path on the supplying portion 10 side of the hot end 1 and to discharge well, from the discharging opening 41, a deposition material in a suitable molten state.

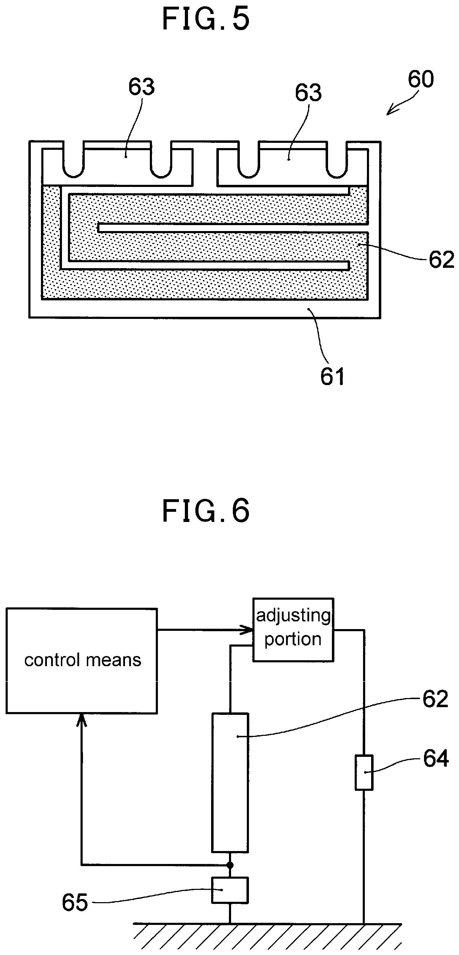

As the heating means 60 in the hot end 1, for example, known ones such as a heating head in which a thick-film resistive body layer is formed on an insulating substrate, or a heat block can be used widely, but a heating head is preferably used from a viewpoint of responsiveness and size. One example of a structure of the heating means (heating head) 60 is shown in FIG. 5. The heating head 60 to be mounted to the melting portion 30 of the printhead 100 has an alumina or zirconia ceramic substrate (insulating substrate) 61 in a shape of a rectangular plate with the thickness of 0.3 mm, the length of 12 mm, and the width of 5 mm, for example, a belt-shaped resistive heating element 62 formed on the surface of the insulating substrate 61, and an electrode 63 formed so as to connect to each of both ends of the resistive heating element 62 at the surface of the insulating substrate 61. The surface of the resistive heating element 62 can be coated with a protective layer (dielectric layer) such as glass, which protective layer includes a filler, for example, or the surface of the resistive heating element 62 can be covered with a different insulating substrate.

With respect to the heating means 60, a paste for a thick film comprising Ag-Pd-Pt alloy powder or ruthenium oxide, for example, can be printed on the insulating substrate 61 in a predetermined pattern and dried, and, thereafter, the dried paste for the thick film can be sintered at a predetermined temperature to form the resistive heating element 62 and the electrode 63.

Moreover, to improve the connection strength between the electrode 63 and a lead (not shown), a notch is formed at a portion of the insulating substrate 61, at which portion the electrode 63 is formed. While two each of the notches is provided for the one electrode 63 in the example in FIG. 3, the number of notches can be one, or can be at least three. Furthermore, a through-hole instead of the notch can be provided in one or a plurality, or a combination of the notch and the through-hole can be used. That is, the notch or the through-hole being provided is to ensure that no connection failure occurs even when a high-temperature heating is carried out or a moving operation is carried out two-dimensionally or three-dimensionally by increasing the connection area or taking a measure in which mechanical engagement such as an anchoring effect is obtained to improve the connection strength between the electrode 63 and the lead.

As shown in FIG. 1, with the heating means 60 being attached to the printhead 100, the side of the rear surface (the surface on which the resistive heating element 62 of the insulating substrate 61 is not formed) of the heating means 60 is joined to the flat surface portion (the lateral surface of the quadrangular cylinder) of the melting portion 30 of the printhead 100 by a silver based thick film paste (Ag in which glass, Cu is contained, for example), for example, being applied as a joining material and sintered. In the example of FIG. 1, another insulating substrate 66 is provided on a side of the resistive heating element 62, which side is opposite to the insulating substrate 61. While two of the heating means 60 are mounted to the melting portion 30 in the printhead 100 so as to oppose each other in the hot end 1, the heating means 60 can be mounted to each of the four flat surface portions of the quadrangular cylinder-shaped melting portion 30. For example, the hot end 1 can be configured to comprise four of the heating means 60 with the heating means 60 being provided at all of the four flat surface portions, or it can be configured to provide the heating means 60 only at the two flat surface portions neighboring each other.

In a case that the heating means 60 has a reduced size, the plurality of heating means 60 can also be provided in the length direction in a one flat surface portion. The melting portion 30 being formed in a quadrangular cylinder shape and having four flat surface portions allows much improvement in the degree of freedom with the mounting position of the heating means 60, making it possible to more suitably adjust the temperature distribution in the flow path 12 in the melting portion 30 in accordance with the type (physical properties) of the filament used. For example, the arrangement of the heating means 60 can also be configured such that, with the heating means 60 being arranged in the two opposing flat surface portions on the upstream side of the filament of the melting portion 30 and the heating means 60 being arranged in all of the four flat surface portions on the downstream side of the filament thereof, a temperature distribution having a higher temperature on the downstream side thereof is obtained.

FIG. 6 is a block diagram showing one example of a control circuit in a case of also measuring the temperature of a substrate using the resistive heating element 62 of the heating means 60 in the hot end 1 and carrying out temperature control of the melting portion 30 by adjusting a heating amount by the resistive heating element 62 in accordance with the temperature measured. That is, the above-mentioned drive circuit is an example in which it is driven with a DC or AC power supply 64, which power supply 64 is connected to the resistive heating element 62 via an adjusting portion to adjust the applied power by adjusting a voltage or an application time, using a battery, a commercial power supply, or a transformer.

A voltage to be supplied by the commercial AC power supply 64 is adjusted by the adjusting portion for power and is adjusted so as to reach a desired temperature. This causes a DC power supply to be unnecessary and a fan to cool a power supply to be unnecessary. However, a DC power supply using a battery can be used. Moreover, while not shown, heating can be carried out by pulse driving to apply a pulse. In that case, besides changing a voltage, a duty cycle can be changed or an effective applied power with respect to heat dissipation can be adjusted by a phase control.

The temperature can be detected utilizing the resistive heating element 62 in accordance with a change in the resistance value thereof. With respect to the change in the resistance value of the resistive heating element 62, as shown in FIG. 6, a change in current can be detected by a shunt resistance 65 being connected serially with the resistive heating element 62 and measuring the voltage at the opposite ends thereof. When the voltage to be applied to the resistive heating element 62 is constant, knowing the change in current allows knowing the change in the resistance value. That is, the resistance value of the resistive heating element 62 has the temperature property that changes in accordance with temperature. Therefore, knowing the resistance value thereof by detecting in advance the temperature property (the temperature coefficient) thereof allows knowing the temperature of the resistive heating element 62, or in other words, the insulating substrate 61. This temperature detection is carried out by a control means. Moreover, with respect to the shunt resistance 65, the lower the resistance value thereof the more preferable as long as it is possible to carry out a temperature detection to avoid the effect of heat dissipation. Furthermore, the resistance having the temperature coefficient being as small as possible is preferable, and current is set to decrease to avoid the effect of heat dissipation by current.

In accordance with the temperature measured using the above-mentioned temperature measurement, a control signal is output from a control means such that a voltage applied to the resistive heating element 62 is adjusted by the adjusting portion, and the temperature of the resistive heating element 62, that is, the insulating substrate 61 is adjusted to a desired temperature. In the middle of a fabrication operation in which a deposition material is softened by the heating means 60 to form a fabricated object, the temperature of the resistive heating element 62 is controlled such that the temperature distribution in the flow path 12 stabilizes.

To prevent the above-mentioned region of the printhead 100, in which region the reverse flow preventing member 50 is mounted, from being excessively heated, and prevent clogging of the flow path 12, the temperature of an area in which the reverse flow preventing member 50 is provided can be measured by a temperature monitoring means (temperature sensor) such as a thermistor or thermocouple, for example. Moreover, separately from temperature measurement by the resistive heating element 62, a temperature sensor to measure the temperature of the melting portion 30 can be mounted to the flat surface portion of the melting portion 30. As the melting portion 30 is formed in a quadrangular cylinder shape, the degree of freedom of the mounting position of the temperature sensor is high, making it possible to monitor the temperature of the melting portion 30 more precisely. In this case, a voltage applied to the resistive heating element 62 of the heating means 60 can be controlled by a control signal based on the temperature measured by the temperature sensor, and the temperature of the area in which the reverse flow preventing member 50 is provided can be controlled. The melting portion 30 can be heated so to have the temperature gradient in accordance with the configuration of the heating means 60. That is, the heating temperature on the lower side (the discharging portion 40 side) of the melting portion 30 is brought to be greater than the heating temperature on the upper portion side (the heat insulating portion 20 side) of the melting portion 30, and the heat amount conducted to the reverse flow preventing member 50 can be reduced to also keep the temperature of the area in which the reverse flow preventing member 50 is provided to a desired temperature.

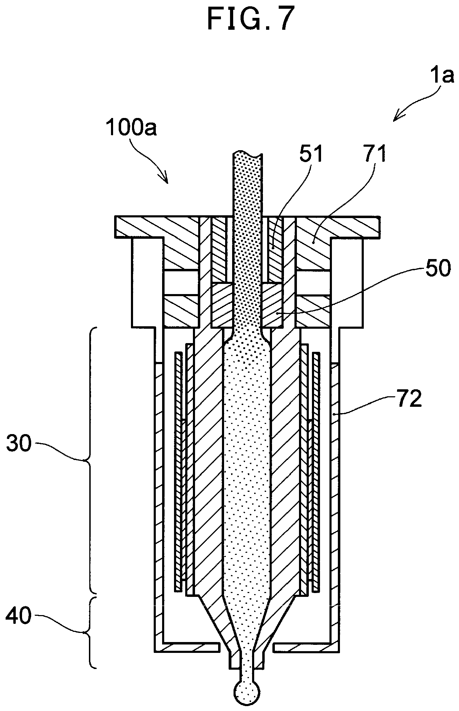

Next, another example of the hot end according to the invention will be described with reference to FIG. 7. A hot end 1a shown in FIG. 7 has a configuration with a part of the supplying portion 10 and the heating insulating portion 20 of the hot end 1 shown in FIG. 1 being removed. In other words, a printhead 100a making up the hot end 1a is made up of the discharging portion 40, the melting portion 30, and a portion of the insulating portion 20 of the hot end 1, to which portion the metal member 71 is to be mounted. Also in the hot end 1a, in the same manner as the hot end 1, the reverse flow preventing member 50 is provided in a stepped portion of the flow path 12 and is fixed with the detachment preventing member 51. Then, to prevent the filament held by the reverse flow preventing member 50 from melting, the metal member 71 is provided on the outer periphery of a region of the hot end 100a, in which region the reverse flow preventing member 50 is provided, and, moreover, the case member 72 to be connected to the metal member 71 is provided.

When the hot end 1, 1a of the invention is mounted to the 3D fabrication apparatus, the side of the hot end, on which side a deposition material is supplied, can be inserted into an opening provided in an adapter to be mounted on the 3D fabrication apparatus body side and fixed laterally using a set screw, for example.

It has been confirmed that the hot end 1, 1a according to the invention described above can fabricate object well using, as a filament, PEEK (polyetheretherketone) being known as superengineering plastic having a high heat resistant temperature. Here, it has been confirmed that a reverse flow of a deposition material melted is prevented by the reverse flow preventing member 50 and no failure of a fabrication operation due to clogging of the deposition material in the flow path 12 occurs, causing a good operation. Moreover, it has been confirmed that the hot end 1, 1a can rapidly increase in temperature to a high temperature of 500°C, so that a filament of low melting-point metals can also be used.

Moreover, the above-mentioned printhead 100 is brought to have the length of approximately 33 mm as a whole, so that the hot end 1 is brought to be much smaller than the existing hot end. Furthermore, in a case that the printhead 100 is formed with a 64 titanium alloy, it is extremely reduced in weight, together with it being reduced in size. Thus, even in a case that fabrication is carried out with the hot end 1 being moved two-dimensionally or three-dimensionally, drive energy can be saved. The above-mentioned hot end 1a, with no need for a part of the supplying portion 10 and the heat insulating portion 20, is further reduced in size with respect to the hot end 1. Moreover, the hot end 1, 1a reutilizes heat added to the printhead 100, 101 by the metal member 71 and the case member 72 for melting of the filament, allowing melting energy to be saved.

Furthermore, in a case that a titanium alloy (for example, 64 titanium) is used as a material for the printhead 100, 100a and a ceramic substrate (for example, an alumina-zirconia substrate) is used as the insulating substrate 61 of the heating means 60, the thermal expansion coefficient for the titanium alloy is close to that for ceramics, making it possible to effectively prevent a joining failure due to the heating and cooling cycles caused by the fabrication operation. Moreover, as the alumina-zirconia substrate is high in mechanical strength relative to the alumina substrate, it can be decreased in thickness, making it possible to further facilitate a size and weight reduction of the heating head.

Furthermore, the melting portion 30 of the printhead 100, 100a, which melting portion 30 has a quadrangular cylinder shape, has a flat surface portion having four faces, so that the number of heating means 60 to be mounted to the melting portion 30 and the mounting position of the heating means 60 can be selected with a high degree of freedom. Moreover, in a case that a temperature monitoring means (temperature sensor) is to be mounted to the flat surface portion as needed, it can be easily mounted to the above-mentioned flat surface portion.

Furthermore, from a viewpoint that the reverse flow preventing member 50 holds with a suitable force of the degree to not inhibit feeding of the filament while being in close contact therewith to prevent an occurrence of a reverse flow, the shape thereof can be determined appropriately, considering the elasticity of the material thereof.

### EXPLANATION OF NUMERALS

1, 1a HOT END
3a FILAMENT IN SOLID STATE
3b FILAMENT IN MELTED STATE
3c FILAMENT IN SOLID-LIQUID MIXED STATE
A ATTACHING JIG
10 SUPPLYING PORTION
11 SUPPLYING OPENING
12 FLOW PATH
20 HEAT INSULATING PORTION
20a OPENING
21, 22 STEPPED PORTION
30 MELTING PORTION
40 DISCHARGING PORTION
41 DISCHARGING OPENING
50 REVERSE FLOW PREVENTING MEMBER
60 HEATING MEANS (HEATING HEAD)
61, 66 INSULATING SUBSTRATE
62 RESISTIVE HEATING ELEMENT
63 ELECTRODE
64 POWER SUPPLY
65 SHUNT RESISTANCE
51 DETACHMENT PREVENTING MEMBER
71 METAL MEMBER
71a MOUNTING HOLE
72 CASE MEMBER
72a GROOVE PORTION
72b HOLE
100, 100a PRINTHEAD

## Claims

1. A hot end for a 3D fabrication apparatus, the hot end comprising:
a printhead (100) having a supplying opening (11) to supply a filament-shaped deposition material, a discharging opening (41) to discharge the deposition material being melted, and a flow path (12) to communicatively couple linearly the supplying opening (11) and the discharging opening (41); and
a heating means (60) to melt the deposition material in the flow path (12),
wherein a reverse flow preventing member (50) to prevent the deposition material melted by the heating means (60) from reversely flowing through the flow path (12) toward the supplying opening (11) side is arranged in the flow path (12) between the heating means (60) and the supplying opening (11), with which reverse flow preventing member the deposition material is brought into contact to be inserted therethrough, which reverse flow preventing member has a ring shape, and
**characterized in that**
the ring shape is a spiral shape, a coil shape, or a coil spring shape

2. The hot end for a 3D fabrication apparatus according to claim 1, the hot end comprising a metal member (71) to be mounted so as to surround a region in which the reverse flow preventing member (50) in the flow path (12) is arranged.

3. The hot end for a 3D fabrication apparatus according to claim 2, the hot end comprising a case member (72) being fixed to the metal member (71) to cover the heating means (60).

4. The hot end for a 3D fabrication apparatus according to any one of claims 1 to 3, wherein the reverse flow preventing member (50) is arranged in abutment with a stepped portion (21) in the flow path (12).

5. The hot end for a 3D fabrication apparatus according to any one of claims 1 to 4, wherein the printhead has a cylinder shape, and the thickness of the peripheral wall of a region in which the reverse flow preventing member (50) in the flow path (12) is arranged is brought to be thinner than the thickness of the peripheral wall of a region in which the heating means (60) is arranged.

6. The hot end for a 3D fabrication apparatus according to claim 4 or 5, wherein an annular detachment preventing member (51) to prevent the reverse flow preventing member (50) from moving toward the supplying opening (11) side is arranged in the flow path (12) toward the supplying opening (11) side with respect to the reverse flow preventing member (50), the inner diameter of detachment preventing member (51) is greater than the inner diameter of the reverse flow preventing member (50).

7. The hot end for a 3D fabrication apparatus according to any one of claims 1 to 6, wherein the reverse flow preventing member (50) is made of an elastic body, a superelastic alloy, or a super elasto-plastic alloy having heat resistance.

8. A three-dimensional fabrication apparatus, to which three-dimensional fabrication apparatus the hot end according to any of one of claims 1 to 7 is mounted.

## Patentansprüche

1. Heißes Ende für eine 3D-Fertigungsvorrichtung, wobei das heiße Ende umfasst:
einen Druckkopf (100), der eine Zuführöffnung (11) zum Zuführen eines filamentförmigen Abscheidungsmaterials, eine Abführöffnung (41) zum Abführen des Abscheidungsmaterials, das geschmolzen ist, und einen Strömungspfad (12) zum kommunikativen linearen Koppeln der Zuführöffnung (11) und der Abführöffnung (41) aufweist; und
eine Heizeinrichtung (60) zum Schmelzen des Abscheidungsmaterials in dem Strömungspfad (12),
wobei ein Umkehrströmungsverhinderungselement (50) zum Verhindern, dass das durch die Heizeinrichtung (60) geschmolzene Abscheidungsmaterial umgekehrt durch den Strömungspfad (12) zu der Seite der Zuführöffnung (11) hin strömt, in dem Strömungspfad (12) zwischen der Heizeinrichtung (60) und der Zuführöffnung (11) angeordnet ist, wobei das Abscheidungsmaterial mit dem Umkehrströmungsverhinderungselement (50) in Kontakt gebracht wird, um durch dieses hindurch eingeführt zu werden, wobei das Umkehrströmungsverhinderungselement (50) eine Ringform aufweist, und
**dadurch gekennzeichnet, dass**
die Ringform eine Spiralform, eine Spulenform oder eine Schraubenfederform ist.

2. Heißes Ende für eine 3D-Fertigungsvorrichtung nach Anspruch 1, wobei das heiße Ende ein Metallelement (71) umfasst, um so montiert zu werden, dass es einen Bereich umgibt, in dem das Umkehrströmungsverhinderungselement (50) in dem Strömungspfad (12) angeordnet ist.

3. Heißes Ende für eine 3D-Fertigungsvorrichtung nach Anspruch 2, wobei das heiße Ende ein Gehäuseelement (72) umfasst, das an dem Metallelement (71) fixiert ist, um die Heizeinrichtung (60) zu bedecken.

4. Heißes Ende für eine 3D-Fertigungsvorrichtung nach einem der Ansprüche 1 bis 3, wobei das Umkehrströmungsverhinderungselement (50) in Anlage an einen gestuften Abschnitt (21) in dem Strömungspfad (12) angeordnet ist.

5. Heißes Ende für eine 3D-Fertigungsvorrichtung nach einem der Ansprüche 1 bis 4, wobei der Druckkopf eine Zylinderform aufweist, und die Dicke der Umfangswand eines Bereichs, in dem das Umkehrströmungsverhinderungselement (50) in dem Strömungspfad (12) angeordnet ist, dazu gebracht ist, dünner als die Dicke der Umfangswand eines Bereichs zu sein, in dem die Heizeinrichtung (60) angeordnet ist.

6. Heißes Ende für eine 3D-Fertigungsvorrichtung nach Anspruch 4 oder 5, wobei ein ringförmiges Ablösungsverhinderungselement (51) zum Verhindern, dass das Umkehrströmungsverhinderungselement (50) sich zu der Seite der Zuführöffnung (11) hin bewegt, in dem Strömungspfad (12) zu der Seite der Zuführöffnung (11) hin in Bezug auf das Umkehrströmungsverhinderungselement (50) angeordnet ist, wobei der Innendurchmesser des Ablösungsverhinderungselements (51) größer als der Innendurchmesser des Umkehrströmungsverhinderungselements (50) ist.

7. Heißes Ende für eine 3D-Fertigungsvorrichtung nach einem der Ansprüche 1 bis 6, wobei das Umkehrströmungsverhinderungselement (50) aus einem elastischen Körper, einer superelastischen Legierung oder einer superelastoplastischen Legierung besteht, die Wärmebeständigkeit aufweist.

8. Vorrichtung für eine dreidimensionale Fertigung, wobei das heiße Ende nach einem der Ansprüche 1 bis 7 an der Vorrichtung für eine dreidimensionale Fertigung montiert ist.

## Revendications

1. Extrémité chaude pour un appareil de fabrication 3D, l'extrémité chaude comprenant :
une tête d'impression (100) présentant une ouverture d'alimentation (11) pour alimenter un matériau de dépôt en forme de filament, une ouverture de décharge (41) pour décharger le matériau de dépôt fondu, et un trajet d'écoulement (12) pour coupler de manière communicative linéairement l'ouverture d'alimentation (11) et l'ouverture de décharge (41) ; et
des moyens de chauffage (60) pour faire fondre le matériau de dépôt dans le trajet d'écoulement (12),
dans laquelle un élément anti-écoulement inverse (50) pour empêcher le matériau de dépôt fondu par l'intermédiaire des moyens de chauffage (60) de s'écouler de manière inverse à travers le trajet d'écoulement (12) vers le côté d'ouverture d'alimentation (11) est agencé dans le trajet d'écoulement (12) entre les moyens de chauffage (60) et l'ouverture d'alimentation (11), élément anti-écoulement inverse avec lequel le matériau de dépôt est amené en contact pour être inséré à travers celui-ci, lequel élément anti-écoulement inverse présente une forme annulaire, et
**caractérisée en ce que**
la forme de l'anneau est une forme de spirale, une forme de bobine ou une forme hélicoïdale.

2. Extrémité chaude pour un appareil de fabrication 3D selon la revendication 1, l'extrémité chaude comprenant un élément métallique (71) devant être monté de manière à entourer une région dans laquelle l'élément anti-écoulement inverse (50) est agencé dans le trajet d'écoulement (12).

3. Extrémité chaude pour un appareil de fabrication 3D selon la revendication 2, l'extrémité chaude comprenant un élément de boîtier (72) étant fixé à l'élément métallique (71) pour recouvrir les moyens de chauffage (60).

4. Extrémité chaude pour un appareil de fabrication 3D selon l'une quelconque des revendications 1 à 3, dans laquelle l'élément anti-écoulement inverse (50) est agencé en butée avec une partie étagée (21) dans le trajet d'écoulement (12).

5. Extrémité chaude pour un appareil de fabrication 3D selon l'une quelconque des revendications 1 à 4, dans laquelle la tête d'impression présente une forme cylindrique, et l'épaisseur de la paroi périphérique d'une région dans laquelle l'élément anti-écoulement inverse (50) dans le trajet d'écoulement (12) est agencé est amenée à être plus mince que l'épaisseur de la paroi périphérique d'une région dans laquelle les moyens de chauffage (60) sont agencés.

6. Extrémité chaude pour un appareil de fabrication 3D selon la revendication 4 ou 5, dans laquelle un élément anti-détachement annulaire (51) pour empêcher l'élément anti-écoulement inverse (50) de se déplacer vers le côté de l'ouverture d'alimentation (11) est agencé dans le trajet d'écoulement (12) vers le côté de l'ouverture d'alimentation (11) par rapport à l'élément anti-écoulement inverse (50), le diamètre intérieur de l'élément anti-détachement (51) étant supérieur au diamètre intérieur de l'élément anti-écoulement inverse (50).

7. Extrémité chaude pour un appareil de fabrication 3D selon l'une quelconque des revendications 1 à 6, dans laquelle l'élément anti-écoulement inverse (50) est constitué d'un corps élastique, d'un alliage super élastique ou d'un alliage super élastique plastique présentant une résistance à la chaleur.

8. Appareil de fabrication en trois dimensions, sur lequel l'extrémité chaude selon l'une quelconque des revendications 1 à 7 est montée.
